# EUROPÄISCHE PATENTSCHRIFT

(11) **EP 4 190 488 B1**
(45) Veröffentlichungstag und Bekanntmachung des Hinweises auf die Patenterteilung: **26.11.2025**
(21) Anmeldenummer: 22216661.3
(22) Anmeldetag: 26.04.2013
(51) Int. Cl.: B24B 9/14, B24B 41/04, B24B 41/06, B24B 47/14, B24B 55/02, B23Q 1/44, B23Q 3/06, B24B 13/005, G02B 27/62

(54) **BEARBEITUNGSEINHEIT, INSBESONDERE FÜR EINE ZENTRIERMASCHINE FÜR WERKSTÜCKE, WIE OPTISCHE LINSEN**
MACHINING UNIT, IN PARTICULAR FOR A CENTERING MACHINE FOR WORKPIECES SUCH AS OPTICAL LENSES
UNITÉ D'USINAGE, EN PARTICULIER POUR UNE MACHINE DE CENTRAGE DE PIÈCES TELLES QUE DES LENTILLES OPTIQUES

(30) Priorität: 22.05.2012 DE 102012010005
(43) Veröffentlichungstag der Anmeldung: 07.06.2023
(62) Teilanmeldung aus: 13002206.4
(73) Patentinhaber: Satisloh AG, 6340 Baar (CH)
(72) Erfinder: Diehl, Joachim, 35398 Gießen (DE); Moos, Steffen, 35435 Wettenberg (DE); Schmidt, Achim, 35633 Lahnau (DE)
(74) Vertreter: Oppermann, Mark

(56) Entgegenhaltungen:
- JP-A- 2005 313 305
- JP-U- H0 572 411
- SU-A1- 1 296 387
- US-A- 3 123 950

## Beschreibung

### TECHNISCHES GEBIET

Die vorliegende Erfindung bezieht sich allgemein auf eine Bearbeitungseinheit nach dem Oberbegriff des Patentanspruchs 1. Insbesondere bezieht sich die Erfindung auf eine Bearbeitungseinheit für eine Zentriermaschine für Werkstücke aus dem Anwendungsgebiet Feinoptik, wo Werkstücke zunächst zentriert zu spannen und in der Folge am Rand zu bearbeiten und/oder abzutasten sind, namentlich optische Linsen, die für ihre Randbearbeitung insbesondere im sogenannten "Glockenspannverfahren" oder "-prozess" zentriert gespannt werden.

### STAND DER TECHNIK

Linsen für Objektive od.dgl. werden nach der Bearbeitung der optischen Flächen "zentriert", damit die optische Achse, deren Lage durch eine Gerade gekennzeichnet ist, welche durch die beiden Krümmungsmittelpunkte der optischen Flächen hindurch verläuft, auch durch die geometrische Mitte der Linse geht. Die Linse wird zu diesem Zweck zunächst zwischen zwei fluchtenden Zentrierspindeln derart ausgerichtet und gespannt, dass die beiden Krümmungsmittelpunkte der Linse mit der gemeinsamen Rotationsachse der Zentrierspindeln zusammenfallen. In der Folge wird der Rand der Linse in einer definierten Beziehung zur optischen Achse der Linse bearbeitet, wie es später für den Einbau der Linse in einer Fassung notwendig ist. Dabei wird dem Rand je nach Werkstoff der Linse (Glas oder Kunststoff) durch spanende Bearbeitung mit geometrisch unbestimmten oder bestimmten Schneiden eine definierte Geometrie sowohl in der Draufsicht auf die Linse - Umfangskontur der Linse - als auch im Radialschnitt gesehen - Kontur des Rands, etwa geradlinige Ausbildung oder Ausbildung mit Stufe(n)/Facette(n) - gegeben.

Unter dem eingangs erwähnten "Glockenspannprozess" versteht man in diesem Zusammenhang einen Ausricht- und Spannvorgang, bei welchem sich die Linse mit ihrer optischen Achse zwischen an den Zentrierspindeln vorgesehenen topfförmigen Spannglocken automatisch bezüglich der beispielsweise vertikal verlaufenden Rotationsachse der Zentrierspindeln ausrichtet, bevor sie gespannt wird. Hierzu wird bei z.B. vertikaler Anordnung der Zentrierspindeln die Linse auf die Spannglocke der unteren Zentrierspindel aufgelegt, worauf die Spannglocke der oberen Zentrierspindel in axialer Richtung relativ zur unteren Spannglocke verfahren wird - entweder durch Absenken der oberen Zentrierspindel oder Anheben der unteren Zentrierspindel - bis auch die obere Spannglocke mit leichtem Druck an der Linse anliegt (Antastphase). Die Linse verschiebt sich nun infolge der Krümmung ihrer optischen Flächen ggf. unter Zugabe eines geeigneten Gleitmittels und/oder Rotation der Zentrierspindeln selbsttätig in Querrichtung, wobei die Spannglocken weiter zusammenfahren (Ausrichtphase). Die Querbewegung der Linse relativ zu den Spannglocken sowie die axiale Relativbewegung der Spannglocken endet, wenn die Linse zwischen den Spannglocken eine Lage eingenommen hat, die den unter den gegebenen geometrischen Verhältnissen minimalen Abstand der Spannglocken ermöglicht. Die dann mit ihrer optischen Achse bezüglich der Rotationsachse der Zentrierspindeln ausgerichtete Linse wird nunmehr zwischen den Spannglocken durch Erhöhen der Spannkraft festgespannt (Spannphase) und kann sodann am Rand bearbeitet werden. Während die Spann- oder Zentrierglocken - manchmal auch als "Spann- oder Zentrierdorne" bezeichnet - für die Optikfertigung genormt sind (auf die deutsche Norm DIN 58736-3 aus dem Juli 2001 wird diesbezüglich ausdrücklich verwiesen), sind für dieses Vorgehen angepasste Zentriermaschinen z.B. aus den Druckschriften DE-A-37 44 118 und DE-A-100 08 710 bekannt.

Ein Problem bei den vorbekannten Zentriermaschinen besteht bei der Kühlschmierstoffzufuhr, wenn die Randbearbeitung des zwischen den Spannglocken gespannten Werkstücks mittels einer Schleifscheibe als Werkzeug erfolgt, die drehbar an einer Schleifspindel der Bearbeitungseinheit gehalten ist. Im Stand der Technik werden für die Kühlschmierstoffzufuhr Kühlschmierstoffröhrchen verwendet, deren Zufuhrenden dicht an der Bearbeitungszone, d.h. dem Eingriffsbereich zwischen Werkzeug und Werkstück positioniert werden müssen. Je nach Umfangskontur des Werkstücks "wandert" die Bearbeitungszone jedoch am Umfang des Werkzeugs, so dass eine optimale Positionierung der Kühlschmierstoffzufuhr schwer möglich ist. Hinzu kommt, dass hohe Umfangsgeschwindigkeiten der Schleifscheibe die Kühlschmierstoffzufuhr noch erschweren. Hierbei behindern die Fliehkräfte am Schleifscheibenumfang und ein von der Schleifscheibe "mitgerissenes" Luftpolster eine hinreichende Benetzung des Schleifscheibenumfangs; die über die Kühlschmierstoffröhrchen auf den Schleifscheibenumfang gerichteten Kühlschmierstoffstrahlen prallen quasi von der Schleifscheibe ab. Um einen Schleifbrand am Werkstück zu verhindern, müssen dann die Vorschub- und/oder Schnittgeschwindigkeiten verringert werden, was natürlich die Bearbeitungszeit in unerwünschter Weise verlängert.

In der den Oberbegriff des Patentanspruchs 1 bildenden Druckschrift JP 2005 313305 A wird in diesem Zusammenhang von einer früher bekannten Kühlschmierstoff-Versorgungseinrichtung für eine Schleifscheibe ausgegangen, die übereinstimmend mit dem Gegenstand dieser Druckschrift die folgenden Merkmale umfasst: Einen Zuführschuh mit einer der Umfangsfläche der Schleifscheibe zugewandten Sitzfläche, welche eine zur Umfangsfläche der Schleifscheibe im Wesentlichen komplementäre Form hat, wobei der Zuführschuh mit seiner Sitzfläche mittels eines Federmechanismus gegen die Umfangsfläche der Schleifscheibe vorgespannt ist. Der Zuführschuh ist dabei mittig mit einer normal zur Umfangsfläche der Schleifscheibe verlaufenden Bohrung versehen, über die der Kühlschmierstoff unter Druck zugeführt werden kann.

Ein Problem der früher bekannten Kühlschmierstoff-Versorgungseinrichtung wurde hier darin gesehen, dass ein Großteil des flüssigen Kühlschmierstoffs in tangentialer Richtung von der Schleifscheibe wegspritzt, bevor er den Eingriffspunkt der Schleifscheibe am Werkstück erreichen kann, was sehr ineffizient sei. Um dieses Problem zu lösen, wurde dann bei der in diesem Stand der Technik beanspruchten Kühlschmierstoff-Versorgungseinrichtung ein flexibles Flüssigkeitsführungselement vorgeschlagen, das während des Schleifens die äußere Schicht der Kühlflüssigkeit auf der Umfangsfläche der Schleifscheibe abdeckt, um die Benetzung der Schleifscheibe zu verbessern.

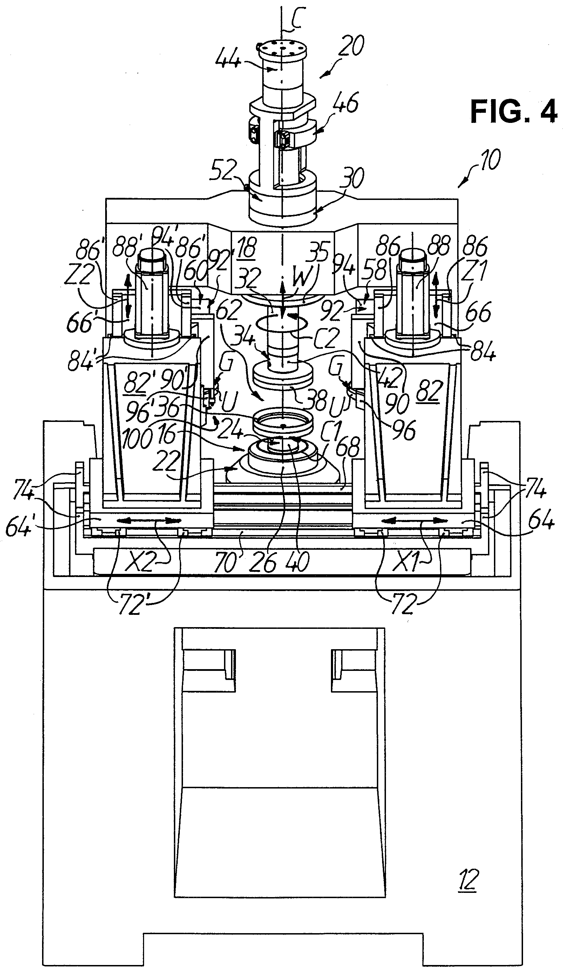

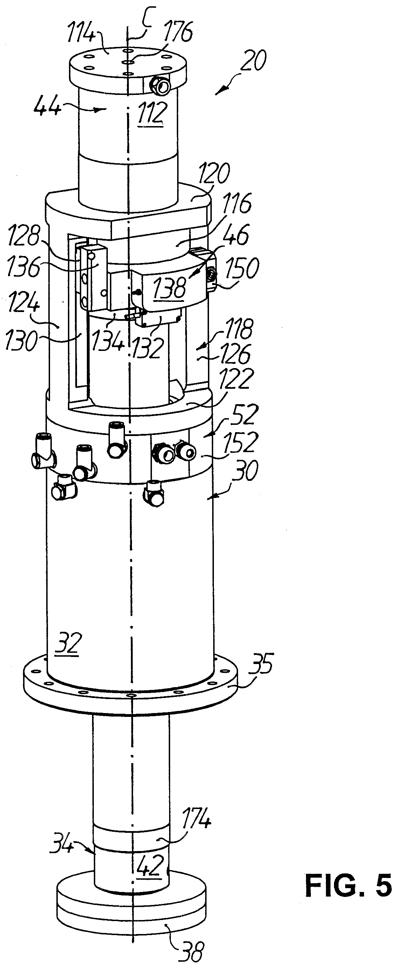

Ferner ist aus der Druckschrift JP H05 72411 U eine Kühlschmierstoff-Versorgungseinrichtung für eine Wafer-Trennschleifvorrichtung bekannt, bei der eine Düse zur Kühlschmierstoff-Versorgung mittels einer Düsenschwenkvorrichtung bezüglich einer Schleifscheibe positioniert werden kann (siehe die Fig. 4 und 5 dieser Druckschrift). Die Düsenschwenkvorrichtung umfasst einen Arm, der an einem Gehäuse mittels eines Bolzens schwenkbar gelagert ist, und einen Düsenhalter, welcher seinerseits an dem Arm mittels eines Schafts schwenkbar gelagert ist. Am Düsenhalter und am Arm greift je eine Abdrückschraube an, über die der gewünschte Anstellwinkel der Düse eingestellt werden kann. Dabei sind zwei Zugfedern vorgesehen, die den Arm und den Düsenhalter in einer Drehrichtung entgegen dem Uhrzeigersinn in Fig. 5 und weg von der Schleifscheibe vorspannen.

Schließlich offenbart die Druckschrift US 3,123,950 eine Vorrichtung zum Reinigen von Schleifscheiben als Werkzeugen, mit der in der Schleiffläche der Schleifscheibe festgesetzte bzw. eingearbeitete Schleifrückstände mittels Ultraschall entfernt werden sollen. Hierzu ist gemäß Fig. 1 dieser Druckschrift in Drehrichtung gesehen ca. 90° hinter dem Eingriffspunkt der Schleifscheibe mit dem Werkstück bzw. ca. 270° davor ein Reinigungsschuh vorgesehen, der an seiner der Schleifscheibe zugewandten Reinigungsfläche Vertiefungen aufweist, die zur Übertragung von Ultraschallschwingungen mit Kühlflüssigkeit gefüllt werden können. Diese Reinigungsvorrichtung liegt in Drehrichtung der Schleifscheibe gesehen also bestimmungsgemäß hinter dem Eingriffspunkt von Werkstück und Werkzeug und vermag insofern bei einem schnell rotierenden Werkzeug, von dem die Kühlflüssigkeit schon nach im Verhältnis wenigen Winkelgraden der Weiterdrehung abgeschleudert wird, keine Kühlflüssigkeit an den Eingriffspunkt zuzuführen.

### AUFGABENSTELLUNG

Der Erfindung liegt die Aufgabe zugrunde, eine Bearbeitungseinheit mit einer Kühlschmierstoff-Versorgungseinrichtung bereitzustellen, die insbesondere in einer Zentriermaschine eine gegenüber dem eingangs geschilderten Stand der Technik verbesserte Zufuhr des Kühlschmierstoffs zum Eingriffsbereich zwischen Werkzeug und Werkstück bewirkt.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 5.

Gemäß der Erfindung ist bei einer Bearbeitungseinheit, insbesondere für eine Zentriermaschine für Werkstücke, namentlich optische Linsen, umfassend eine ein Schleifspindelgehäuse aufweisende Schleifspindel, an der eine Schleifscheibe als Werkzeug drehbar gehalten ist, und eine Kühlschmierstoff-Versorgungseinrichtung für die Zufuhr eines Kühlschmierstoffs zu der Schleifscheibe, wobei die Kühlschmierstoff-Versorgungseinrichtung einen zumindest mittelbar an dem Schleifspindelgehäuse gehaltenen Zuführschuh hat, der mittig mit einer Vertiefung versehen ist, in die der Kühlschmierstoff unter Druck zuführbar ist, und welcher eine der Schleifscheibe zugewandte Sitzfläche aufweist, mit der der Zuführschuh auf einer Umfangsfläche der Schleifscheibe sitzt und die eine zur Umfangsfläche der Schleifscheibe im Wesentlichen komplementäre Form hat, und wobei ein Federmechanismus vorgesehen ist, mittels dessen der Zuführschuh mit seiner Sitzfläche gegen die Umfangsfläche der Schleifscheibe vorgespannt ist; die Vertiefung taschenartig in der Sitzfläche des Zuführschuhs ausgebildet, wobei der Zuführschuh über einen Schuhhalter an einem schleifspindelgehäusefesten Gelenk schwenkbar angelenkt ist, das in Drehrichtung der Schleifscheibe gesehen vor dem Zuführschuh liegt, so dass der Zuführschuh im Wesentlichen tangential an die Umfangsfläche der Schleifscheibe anlegbar ist.

Somit erfolgt die Zufuhr des Kühlschmierstoffs zur Schleifscheibe quasi durch einen "formschlüssigen" Spalt zwischen der Umfangsfläche der Schleifscheibe und der Sitzfläche des Zuführschuhs, welcher als Formstück ausgebildet im Bereich seiner Sitzfläche eine bezogen auf die Randkontur der Schleifscheibe im Wesentlichen formgleiche Negativkontur besitzt, und zwar sowohl im Quer- als auch im Längsschnitt gesehen, und mittels des Federmechanismus in Richtung der Schleifscheibe gepresst wird. Dieser Spalt stellt sich automatisch ein, wenn der Zuführschuh infolge der Zufuhr des Kühlschmierstoffs unter Druck in die taschenartige Vertiefung gegen die Federkraft des Federmechanismus geringfügig von der Schleifscheibe abhebt, wobei die Spaltbreite bzw. -höhe abhängig ist vom Zuführdruck des Kühlschmierstoffs. In der Folge wird der mittels des Zuführschuhs an die Schleifscheibe radial "angelegte" - im Gegensatz zu auf die Schleifscheibe gespritzte - Kühlschmierstoff von der sich schnell drehenden Schleifscheibe "mitgerissen".

Untersuchungen der Anmelderin haben überraschenderweise gezeigt, dass der so zugeführte flüssige Kühlschmierstoff - verglichen mit dem eingangs geschilderten Stand der Technik - verhältnismäßig lange an der Schleifscheibe verbleibt (z.T. noch über einen Schleifscheibensektor von 90° hinaus), bevor er von der Schleifscheibe fliehkraftbedingt weggeschleudert wird. Dies ist insofern vorteilhaft, als der das eingangs beschriebene "mitgerissene" Luftpolster offenbar unterbrechende bzw. von der Schleifscheibe "abstreifende" Zuführschuh relativ weit entfernt von der Eingriffsstelle zwischen Schleifscheibe und Werkstück positioniert werden kann, ohne dass dies einer hinreichenden Kühlung bzw. Schmierung zuwiderläuft. Hieraus ergeben sich nicht nur Vorteile, was das Werkstückhandling angeht; insbesondere bereitet ein "Wandern" der Eingriffsstelle zwischen Schleifscheibe und Werkstück am Schleifscheibenumfang, welches speziell dann auftritt, wenn der Werkstückrand in einer Draufsicht gesehen von der Kreisform abweicht, im Hinblick auf eine ausreichende Kühlung bzw. Schmierung keine Probleme. Die somit bewirkte optimale Benetzung - und damit Temperierung und Spülung - des Schleifscheibenumfangs minimiert ferner den Werkzeugverschleiß. Außerdem gestattet sie hohe Vorschub- und Schnittgeschwindigkeiten sowie gleichzeitig die Durchführung des sogenannten "Tiefschleifverfahrens", bei dem Werkzeug und Werkstück nicht nur linien- oder punktförmig sondern auf einer großen Fläche im Eingriff sind, was zu entsprechend höheren Zerspanungsleistungen (Zeitspanvolumina) führt.

Dadurch, dass der Zuführschuh über den Schuhhalter an dem schleifspindelgehäusefesten Gelenk schwenkbar angelenkt ist, das in Drehrichtung der Schleifscheibe gesehen vor dem Zuführschuh liegt, ist dafür Sorge getragen, dass der Zuführschuh im Wesentlichen tangential an die Umfangsfläche der Schleifscheibe anlegbar ist. Gegenüber einer linearen Führung des Zuführschuhs in radialer Richtung bezogen auf die Drehachse der Schleifscheibe ist die erfindungsgemäße schwenkbare Anlenkung des Zuführschuhs auch insofern vorteilhaft, als sie kostengünstiger realisierbar ist, sich die Positionierung des Zuführschuhs an der Schleifscheibe und ein Wechsel des Zuführschuhs oder der Schleifscheibe einfacher gestalten und die Gefahr eines Verkantens oder Verklemmens im Grunde nicht besteht.

Wenngleich es sich bei Zentriermaschinen um ein bevorzugtes Einsatz- bzw. Anwendungsgebiet für die vorbeschriebene Kühlschmierstoff-Versorgungseinrichtung handelt, ist Letztere ebenfalls für andere Schleifmaschinen im Optikbereich von Interesse, beispielsweise auch für Schleifmaschinen mit Umfangsschleifscheiben, die der annähernd punktuellen Bearbeitung von (auch) asphärischen Linsen im Drehumfangs-Quer- oder Längsschleifverfahren dienen.

In einer bevorzugten Ausgestaltung der Bearbeitungseinheit besteht der Zuführschuh der Kühlschmierstoff-Versorgungseinrichtung aus einem zerspanbaren Material, vorzugsweise Kunststoff, wobei die Sitzfläche am Zuführschuh mittels der Schleifscheibe als Negativkontur der Umfangsfläche der Schleifscheibe eingeschliffen ist. Dies hat nicht nur den Vorteil, dass so die Sitzfläche am Zuführschuh auf einfache Weise konturgenau hergestellt werden kann, sondern ist auch insofern vorteilhaft, als sich eine durch Verschleiß verändernde Schleifscheibenkontur weiterhin auf den Zuführschuh überträgt, und zwar automatisch, (auch) während der Bearbeitung des Werkstücks.

Vorzugsweise ist die Vorspannkraft des Federmechanismus einstellbar, so dass die Breite bzw. Höhe des vorbeschriebenen Spalts zwischen Schleifscheibe und Zuführschuh auch über die Federvorspannung veränderbar ist, neben dem Zuführdruck des Kühlschmierstoffs. Ggf. kann bei der Spalteinstellung der Zuführdruck des Kühlschmierstoffs dann auch konstant gehalten werden. Der Spalt ist somit über zwei variable Größen (Druck, Federkraft) einfacher einstellbar, so dass die Benetzung der Schleifscheibe mit dem Kühlschmierstoff den jeweiligen Einsatzerfordernissen entsprechend leichter optimiert werden kann.

Schließlich ist in einer bevorzugten Ausgestaltung der Bearbeitungseinheit am Schleifspindelgehäuse ein Spritzschutz angebracht, der die Schleifscheibe bis auf einen Eingriffsbereich für eine Randbearbeitung der optischen Linse umgibt, wobei die Kühlschmierstoff-Versorgungseinrichtung über den Spritzschutz am Schleifspindelgehäuse montiert ist.

### KURZE BESCHREIBUNG DER ZEICHNUNGEN

Im Folgenden wird die Erfindung anhand eines bevorzugten Ausführungsbeispiels einer Bearbeitungseinheit einer Zentriermaschine unter Bezugnahme auf die beigefügten, teilweise vereinfachten bzw. schematischen Zeichnungen näher erläutert. Zur Vereinfachung der Darstellung wurden in den Zeichnungen neben Teilen der Verkleidung der Zentriermaschine insbesondere auch die Bedieneinheit und Steuerung, Scheiben, Ablagen für Werkstücke und Werkzeuge, die Versorgungseinrichtungen (einschließlich Leitungen, Schläuche und Rohre) für Strom, Druckluft und Kühlschmierstoff, der Rücklauf für den Kühlschmierstoff sowie die Mess-, Wartungs- und Sicherheitseinrichtungen zumeist weggelassen, jedenfalls soweit sie für das Verständnis der Erfindung nicht erforderlich sind. In den Zeichnungen zeigen:
- Fig. 1: eine perspektivische Ansicht einer Zentriermaschine mit zwei erfindungsgemäßen Bearbeitungseinheiten für insbesondere optische Linsen als Werkstücke von schräg oben / vorne rechts;
- Fig. 2: eine im Maßstab gegenüber der Fig. 1 vergrößerte, abgebrochene perspektivische Ansicht der Zentriermaschine gemäß Fig. 1 von schräg oben / seitlich rechts;
- Fig. 3: eine Vorderansicht der Zentriermaschine gemäß Fig. 1;
- Fig. 4: eine perspektivische Ansicht der Zentriermaschine gemäß Fig. 1 von schräg oben / hinten;
- Fig. 5: eine perspektivische Ansicht einer oberen Zentrierspindel-Baugruppe der Zentriermaschine gemäß Fig. 1 in einer von der Zentriermaschine im Übrigen isolierten Darstellung, mit einer Spannglocke (unten), die an einer in einem Zentrierspindelgehäuse gelagerten Zentrierspindelwelle aufgenommen ist;
- Fig. 6: eine Längsschnittansicht der oberen Zentrierspindel-Baugruppe gemäß Fig. 5;
- Fig. 7: eine vergrößerte Darstellung des insbesondere eine elektrische Hubeinrichtung für die Zentrierspindelwelle zeigenden Details VII in Fig. 6, mit zusätzlich angedeuteter Druckluftversorgung für eine Luftlageranordnung zur Lagerung eines Messkopfs auf der Zentrierspindelwelle;
- Fig. 8: eine vergrößerte Darstellung des insbesondere einen elektrischen Drehantrieb und eine kombinierte pneumatische Spann- und Gewichtsausgleichseinrichtung für die Zentrierspindelwelle zeigenden Details VIII in Fig. 6, mit zusätzlich angedeuteter Druckluftversorgung für einen oberen Luftlagerabschnitt einer Luftlageranordnung zur Lagerung der Zentrierspindelwelle in dem Zentrierspindelgehäuse;
- Fig. 9: eine vergrößerte Darstellung des insbesondere die Spannglockenaufnahme an der Zentrierspindelwelle zeigenden Details IX in Fig. 6, mit zusätzlich angedeuteter Druckluftversorgung für einen unteren Luftlagerabschnitt der Luftlager- anordnung zur Lagerung der Zentrierspindelwelle in dem Zentrierspindelgehäuse;
- Fig. 10: eine Längsschnittansicht der oberen Zentrierspindel-Baugruppe gemäß Fig. 5, mit angedeuteter Stromversorgung für die Hubeinrichtung und Druckluftversorgung / Ventilanordnung für die kombinierte pneumatische Spann- und Gewichtsausgleichseinrichtung, in einem Zustand nach erfolgtem Gewichtsausgleich in Vorbereitung eines Glockenspannprozesses;
- Fig. 11: eine der Fig. 10 ähnliche Längsschnittansicht der oberen Zentrierspindel-Baugruppe gemäß Fig. 5, mit nach der Antastphase des Glockenspannprozesses auf eine optische Linse abgesenkter Spannglocke während der Ausrichtphase des Glockenspannprozesses;
- Fig. 12: eine den Fig. 10 und 11 ähnliche Längsschnittansicht der oberen Zentrierspindel-Baugruppe gemäß Fig. 5, in einem Zustand während der Spannphase des Glockenspannprozesses;
- Fig. 13: eine perspektivische Ansicht der in den Fig. 1 und 3 linken, eine Schleifspindel mit einer daran drehbar gehaltenen Schleifscheibe aufweisenden, erfindungsgemäßen Bearbeitungseinheit der Zentriermaschine gemäß Fig. 1 in einer von der Zentriermaschine im Übrigen isolierten Darstellung, zur Veranschaulichung einer Kühlschmierstoff-Versorgungseinrichtung für die Zufuhr eines Kühlschmierstoffs zu der Schleifscheibe;
- Fig. 14: eine vergrößerte Schnittansicht insbesondere der Kühlschmierstoff-Versorgungseinrichtung gemäß Fig. 13 entsprechend der Schnittverlaufslinie XIV-XIV in den Fig. 3 und 13;
- Fig. 15: eine vergrößerte Schnittansicht der Kühlschmierstoff-Versorgungseinrichtung gemäß Fig. 13 entsprechend der Schnittverlaufslinie XV-XV in Fig. 14;
- Fig. 16: eine vergrößerte Schnittansicht der Kühlschmierstoff-Versorgungseinrichtung gemäß Fig. 13 entsprechend der Schnittverlaufslinie XVI-XVI in Fig. 14; und
- Fig. 17 bis 19: perspektivische Ansichten der in den Fig. 1 und 3 rechten Bearbeitungseinheit der Zentriermaschine gemäß Fig. 1 in einer von der Zentriermaschine im Übrigen isolierten Darstellung, ohne Spritzschutz und Kühlschmierstoff-Versorgungseinrichtung, zur Veranschaulichung der Arbeitsweise einer in der Zentriermaschine integrierten Planschlag-Messeinrichtung zur Kontrolle der Zentrierung der - wie in diesen Figuren ebenfalls schematisch angedeutet - zwischen den Spannglocken gehaltenen optischen Linse.

### DETAILLIERTE BESCHREIBUNG DES AUSFÜHRUNGSBEISPIELS

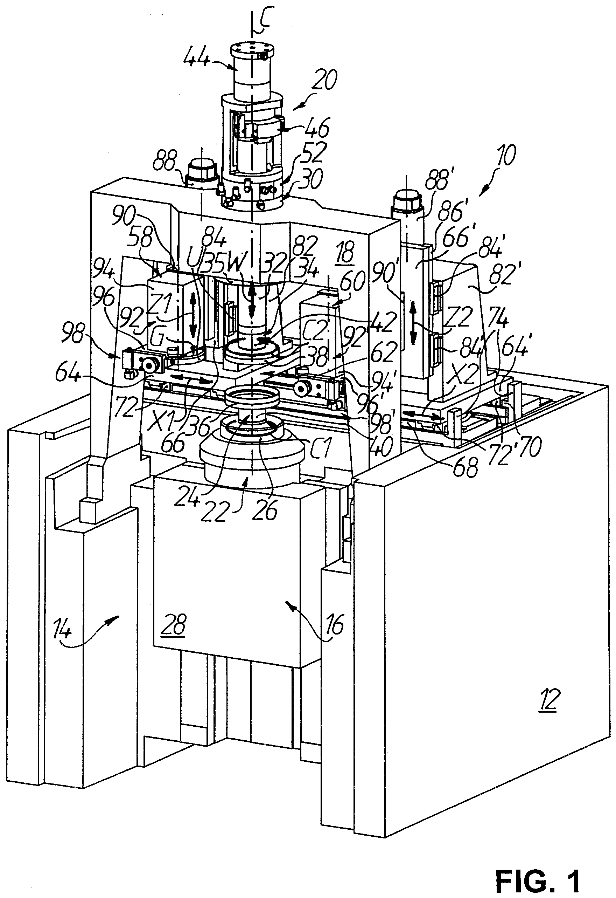

In den Fig. 1 bis 4 ist eine CNC-geregelte Zentriermaschine für Werkstücke, insbesondere optische Linsen L mit 10 beziffert. Die Zentriermaschine 10 hat ein Maschinenbett 12 aus Polymerbeton, das einen in Fig. 1 vorderen Aufnahmeraum 14 für eine untere Zentrierspindel-Baugruppe 16 aufweist, die fest an dem Maschinenbett 12 montiert ist. In dem Aufnahmeraum 14 ist ein brückenartiges Portal 18 auf dem Maschinenbett 12 aufgeständert, welches sich nach oben über Letzteres wegerstreckt und an zentraler Stelle eine obere Zentrierspindel-Baugruppe 20 trägt, die nachfolgend unter Bezugnahme auf die Fig. 5 bis 12 noch ausführlich beschrieben werden wird. Die untere Zentrierspindel-Baugruppe 16 umfasst eine untere Zentrierspindel 22 (Festspindel), deren über einen Innenläufer-Torquemotor (nicht gezeigt) um eine Werkstück-Drehachse C1 drehend antreibbare, aber axiale feste untere Zentrierspindelwelle 24 mittels Luftlagern (nicht dargestellt) gelagert in einem unteren Zentrierspindelgehäuse 26 aufgenommen ist, welches seinerseits mit einem Umgehäuse 28 am Maschinenbett 12 befestigt ist.

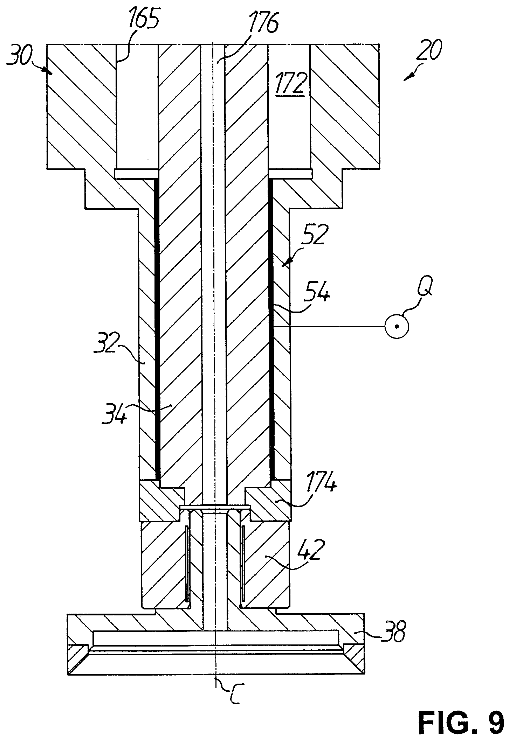

Wie noch näher erläutert werden wird umfasst die obere Zentrierspindel-Baugruppe 20 zunächst eine obere Zentrierspindel 30 (Spannspindel) mit einem oberen Zentrierspindelgehäuse 32, in dem eine um eine Werkstück-Drehachse C2 drehend antreibbare obere Zentrierspindelwelle 34 axial verschiebbar aufgenommen ist. Die obere Zentrierspindel 30 durchgreift mit ihrem Zentrierspindelgehäuse 32 eine zentrale Öffnung im Portal 18, mit dem das Zentrierspindelgehäuse 32 von unten über einen Lagerring 35 (in Fig. 9 weggelassen) verschraubt ist. Die untere Zentrierspindelwelle 24 und die obere Zentrierspindelwelle 34 sind derart angeordnet, dass sie bezüglich einer vertikal verlaufenden Zentrierachse C axial fluchten, und an den einander zugewandten Enden jeweils zur Aufnahme einer Spannglocke 36, 38 ausgebildet, wie sie aus der schon eingangs erwähnten deutschen Norm DIN 58736-3 bekannt ist. Beide Zentrierspindelwellen 24, 34 sind unabhängig voneinander im Drehwinkel lagegeregelt um die Werkstück-Drehachsen C1, C2 drehend antreibbar; ein Synchronlauf der Zentrierspindelwellen 24, 34 wird CNC-technisch bewirkt. Zur spielfreien und festen Aufnahme der Spannglocken 36, 38 ist jede Zentrierspindelwelle 24, 34 endseitig mit einem an sich bekannten Hydrodehnfutter 40, 42 versehen.

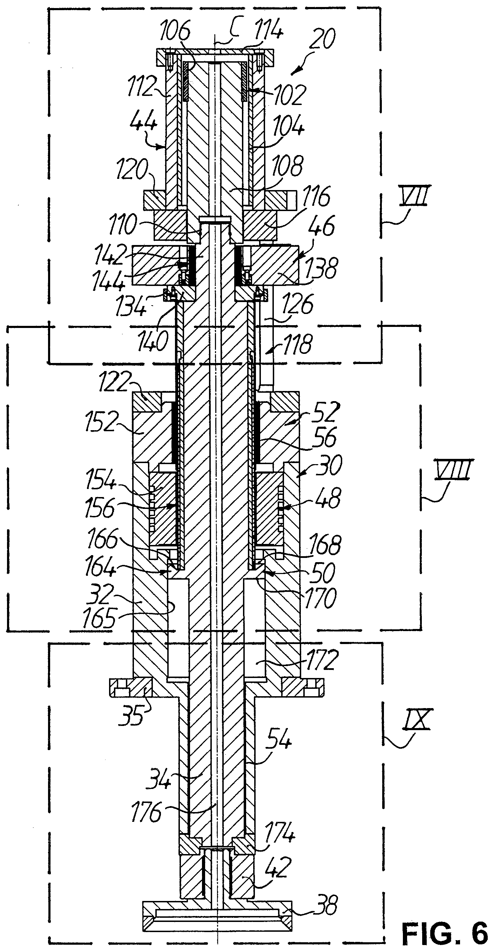

Ferner umfasst die obere Zentrierspindel-Baugruppe 20 gemäß insbesondere den Fig. 6 bis 9 allgemein - in einer Reihenfolge von oben nach unten in den Figuren gesehen; später noch jeweils detailliert beschrieben - (i) eine Hubeinrichtung 44, mittels der die obere Zentrierspindelwelle 34 bezüglich der unteren Zentrierspindelwelle 24 entlang der Zentrierachse C feinfühlig axial zustellbar ist (lagegeregelte Spannglocken-Linearachse W), um die optische Linse L zwischen den Spannglocken 36, 38 auszurichten, (ii) ein Messsystem 46 zur Erfassung der Axialposition und der Winkelposition der oberen Zentrierspindelwelle 34 bezüglich des oberen Zentrierspindelgehäuses 32, (iii) einen Drehantrieb 48, mittels dessen die über die Hubeinrichtung 44 axial zustellbare obere Zentrierspindelwelle 34 drehend antreibbar ist, (iv) eine - im dargestellten Ausführungsbeispiel kombinierte - pneumatische Spann- und Gewichtsausgleichseinrichtung 50, die insbesondere der Aufbringung einer Spannkraft an der oberen Zentrierspindelwelle 34 dient, um die zwischen den Spannglocken 36, 38 ausgerichtete optische Linse L zu spannen, sowie einer Luftlageranordnung 52 mit zwei Luftlagerabschnitten 54, 56 für die obere Zentrierspindelwelle 34, wobei der Drehantrieb 48 und die Spann- und Gewichtsausgleichseinrichtung 50 axial zwischen den Luftlagerabschnitten 54, 56 liegen, mit der Besonderheit, dass die Hubeinrichtung 44, der Drehantrieb 48 und die Spann- und Gewichtsausgleichseinrichtung 50 koaxial bezüglich der Zentrierachse C angeordnet sind.

Wie weiterhin insbesondere den Fig. 1 bis 4 zu entnehmen ist weist die Zentriermaschine 10 zwei relativ zur Zentrierachse C bewegbare Bearbeitungseinheiten 58, 60 mit jeweils einer Schleifscheibe G als Werkzeug für eine Randbearbeitung der zwischen den Spannglocken 36, 38 gespannten optischen Linse L auf. Beide Bearbeitungseinheiten 58, 60 sind unabhängig voneinander in einem von dem Portal 18 seitlich und nach oben begrenzten Arbeitsraum 62 bewegbar, in den auch die beiden Zentrierspindeln 22, 30 mit ihren Spannglocken 36, 38 von unten bzw. oben hineinragen, und zwar jeweils in einer Richtung parallel zur Zentrierachse C (lagegeregelte Werkzeug-Linearachse Z1 bzw. Z2) und in einer Richtung senkrecht hierzu (lagegeregelte Werkzeug-Linearachse X1 bzw. X2). Der Bewegungsmechanismus hierfür umfasst zwei bezüglich einer gedachten, die Zentrierachse C beinhaltenden Ebene spiegelsymmetrisch angeordnete und ausgebildete "gekippte" Kreuztischanordnungen mit jeweils einem angetriebenen X-Schlitten 64, 64' und jeweils einem angetriebenen Z-Schlitten 66, 66'.

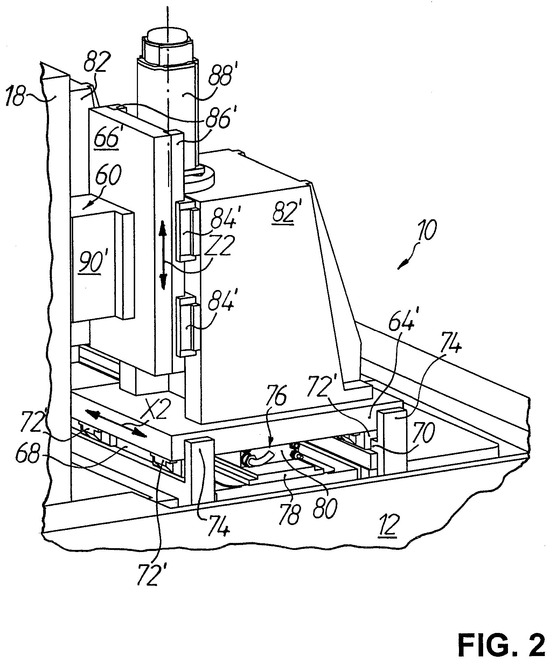

Genauer gesagt sind in den Fig. 1 bis 3 hinter dem Portal 18 und parallel hierzu zwei ebenfalls parallel zueinander verlaufende Führungsschienen 68, 70 auf dem Maschinenbett 12 montiert, die der axialen Führung beider X-Schlitten 64, 64' dienen, wozu jeder X-Schlitten 64, 64' mit zwei Paaren von Führungswagen 72, 72' ausgerüstet ist, von denen das eine Paar mit der einen Führungsschiene 68 und das andere Paar mit der anderen Führungsschiene 70 eingreift. Für den linearen Antrieb der auf den mit gummigepufferten (nicht näher gezeigt) Endanschlägen 74 versehenen Führungsschienen 68, 70 geführten X-Schlitten 64, 64' ist für jeden Schlitten ein Linearmotor 76 vorgesehen (lediglich für den in den Fig. 1 und 2 rechten X-Schlitten 64' zu sehen), jeweils mit einem von oben auf dem Maschinenbett 12 montierten Stator 78 (Magnete) und einem von unten am jeweiligen X-Schlitten 64, 64' montierten Läufer 80 (Spulen), wie am besten in Fig. 2 zu erkennen ist.

Auf jedem X-Schlitten 64, 64' ist von oben eine Konsole 82, 82' aufgeschraubt, an der der jeweilige Z-Schlitten 66, 66' geführt ist. Hierfür sind an der jeweiligen Konsole 82, 82' auf der dem Portal 18 zugewandten Stirnseite in paralleler Anordnung zwei Paare von Führungswagen 84, 84' montiert, die mit an jedem Z-Schlitten 66, 66' paarweise parallel zueinander angebrachten Führungsschienen 86, 86' eingreifen. Für den linearen Antrieb der Z-Schlitten 66, 66' ist jeweils ein Servomotor 88, 88' vorgesehen, der von oben an der jeweiligen Konsole 82, 82' angeflanscht ist und eine Gewindespindel (nicht gezeigt) antreibt, die mit einer schlittenseitigen Gewindemutter (ebenfalls nicht dargestellt) eingreift. Auf jedem Z-Schlitten 66, 66' ist dem Portal 18 zugewandt ein Spindelbock 90, 90' angebracht, an dem eine Schleifspindel 92, 92' der jeweiligen Bearbeitungseinheit 58, 60 mit ihrem Schleifspindelgehäuse 94, 94' montiert ist. Jede Schleifspindel 92, 92' umfasst in an sich bekannter Weise einen elektrischen Drehantrieb (nicht näher gezeigt) für die jeweilige Schleifscheibe G.

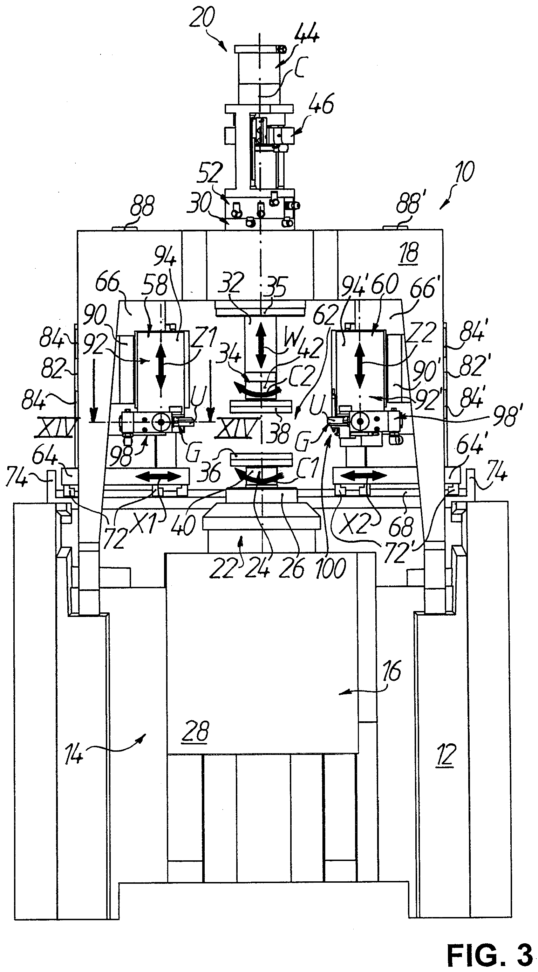

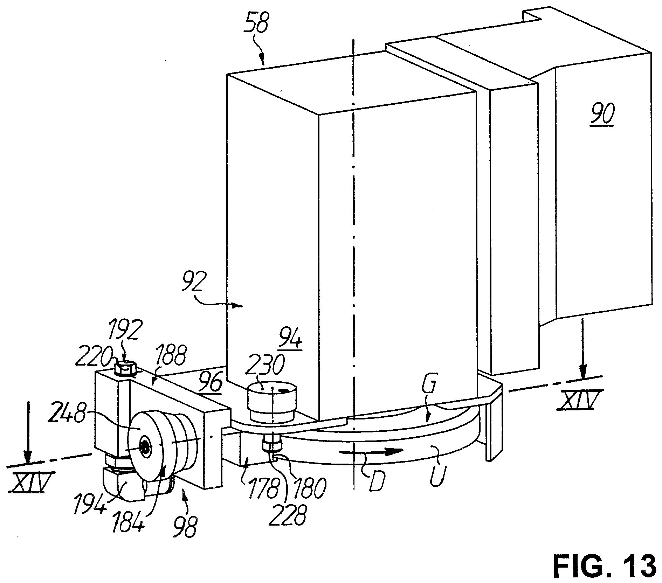

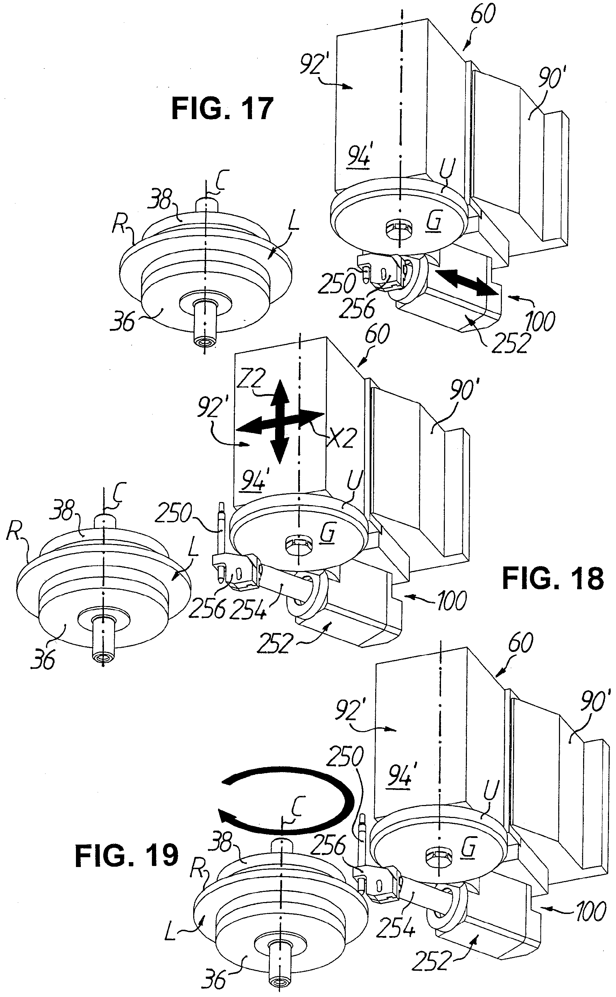

Zu erkennen sind in den Fig. 1, 3 und 4 schließlich noch ein an jedem Schleifspindelgehäuse 94, 94' angebrachter Spritzschutz 96, 96', der die jeweilige Schleifscheibe G bis auf einen Eingriffsbereich für die Randbearbeitung der optischen Linse L umgibt, und an jeder Bearbeitungseinheit 58, 60 eine Kühlschmierstoff-Versorgungseinrichtung 98, 98', die über den Spritzschutz 96, 96' am jeweiligen Schleifspindelgehäuse 94, 94' montiert ist und nachfolgend anhand der Fig. 13 bis 16 noch ausführlich beschrieben werden wird. Darüber hinaus sind in den Fig. 3 und 4 noch Teile einer Planschlag-Messeinrichtung 100 zur Kontrolle der Zentrierung zu sehen, die bei der Bearbeitungseinheit 60 von unten am Spindelbock 90' angeflanscht ist und später unter Bezugnahme auf die Fig. 17 bis 19 noch im Detail erläutert werden wird.

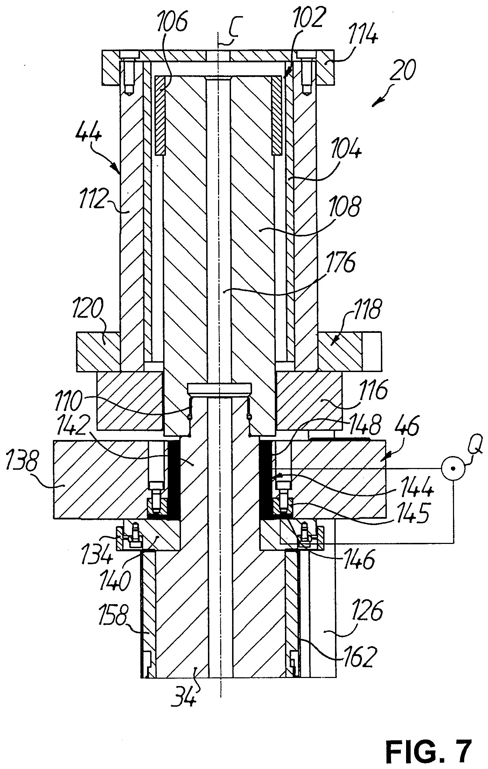

In den Fig. 5 bis 9 sind weitere Details der oberen Zentrierspindel-Baugruppe 20 zu sehen. Gemäß insbesondere den Fig. 6 und 7 weist die Hubeinrichtung 44 einen mit der axial zustellbaren oberen Zentrierspindelwelle 34 wirkverbundenen Tauchspulenantrieb 102 auf, der eine (oder mehrere) bezüglich der Zentrierachse C koaxiale Spule(n) 104 und wenigstens einen mit der Spule 104 zusammenwirkenden Permanentmagneten 106 umfasst. Während der Permanentmagnet 106 an einem Rotorteil 108 befestigt ist, das mit der axial zustellbaren oberen Zentrierspindelwelle 34 über eine Verschraubung 110 fest verbunden ist, so dass es zusammen mit der oberen Zentrierspindelwelle 34 rotieren kann, ist die den Permanentmagneten 106 umgebende Spule 104 in einem maschinenfesten Tauchspulen-Antriebsgehäuse 112 montiert, das seinerseits die Spule 104 umgibt. In Fig. 7 nach oben ist das im Wesentlichen hohlzylindrische Tauchspulen-Antriebsgehäuse 112 mit einem daran festgeschraubten Gehäusedeckel 114 verschlossen. Von unten in Fig. 7 ist eine ringförmige Flanschplatte 116 am Tauchspulen-Antriebsgehäuse 112 angeschraubt (die Schrauben sind nicht gezeigt), durch die sich das Rotorteil 108 hindurch erstreckt.

Das Tauchspulen-Antriebsgehäuse 112 mit der Spule 104, dem Gehäusedeckel 114 und der Flanschplatte 116 ist gegenüber dem oberen Zentrierspindelgehäuse 32 über einen Antriebshalter 118 abgestützt, der am besten in Fig. 5 zu sehen ist. Der Antriebshalter 118 umfasst eine obere Ringscheibe 120 und eine untere Ringscheibe 122, die über zwei Stege 124, 126 miteinander verbunden sind, welche parallel zur Zentrierachse C verlaufen und - bezogen auf die Zentrierachse C - einander diametral gegenüberliegen. Das Tauchspulen-Antriebsgehäuse 112 erstreckt sich durch die obere Ringscheibe 120 des Antriebshalters 118 hindurch und ist mit diesem über die Flanschplatte 116 fest verbunden, die von unten mittels Schrauben (ebenfalls nicht dargestellt) an der oberen Ringscheibe 120 angeflanscht ist.

In dem Freiraum zwischen den Ringscheiben 120, 122 und den Stegen 124, 126 des Antriebshalters 118 ist das Messsystem 46 zur Erfassung der Axial- und Winkelpositionen der oberen Zentrierspindelwelle 34 aufgenommen. Das Messsystem 46 umfasst gemäß insbesondere Fig. 5 einen Axialmesskopf 128, der in an sich bekannter Weise mit einem Maßband 130 zusammenwirkt, um die Axialposition der oberen Zentrierspindelwelle 34 bezüglich des Zentrierspindelgehäuses 32 zu erfassen, und einen Winkelmesskopf 132, welcher in an sich bekannter Weise mit einem Messring 134 (siehe die Fig. 6 und 7) zusammenwirkt, um die Winkelposition der oberen Zentrierspindelwelle 34 um die Zentrierachse C zu erfassen.

Während das Maßband 130 an dem in Fig. 5 linken Steg 124 des Antriebshalters 118 befestigt ist, wobei es den Freiraum zwischen den Ringscheiben 120, 122 des Antriebshalters 118 fast vollständig überbrückt, ist der Axialmesskopf 128 über einen Messkopfadapter 136 an einem Messkopfträger 138 angebracht. An dem Messkopfträger 138 ist auch der Winkelmesskopf 132 befestigt. Der Messring 134 hingegen ist gemäß den Fig. 6 und 7 an einem Messringträger 140 angebracht, der an einem oberen Absatz 142 der oberen Zentrierspindelwelle 34 drehfest mit Letzterer verbunden ist.

Der Messkopfträger 138 ist gegenüber der oberen Zentrierspindelwelle 34 über eine kombinierte Axial/Radial-Luftlageranordnung 144 gelagert, die gemäß Fig. 7 an einem am Messkopfträger 138 angeschraubten Lagerring 145 ein ringförmiges poröses Axiallagerpad 146 und am Innenumfang des Messkopfträgers 138 eine poröse Radiallagerbuchse 148 umfasst. Wie in Fig. 7 auch gezeigt ist sind das Axiallagerpad 146 und die Radiallagerbuchse 148 der Axial/Radial-Luftlageranordnung 144 an eine Druckluftquelle Q angeschlossen, wobei das Axiallagerpad 146 den Messkopfträger 138 gegenüber dem Messringträger 140 lagert, während die Radiallagerbuchse 148 den Messkopfträger 138 auf dem oberen Absatz 142 der Zentrierspindelwelle 34 lagert. In Fig. 5 ist bei 150 schließlich noch eine luftgelagerte Verdrehsicherung angedeutet, über die sich der Messkopfträger 138 am in Fig. 5 rechten Steg 126 des Antriebshalters 118 rotativ abstützt.

Es ist ersichtlich, dass sich der Messkopfträger 138 zusammen mit der oberen Zentrierspindelwelle 34 sehr leichtgängig in axialer Richtung relativ zum maschinenfesten Zentrierspindelgehäuse 32 bewegen kann, die Drehbewegung der Zentrierspindelwelle 34 hingegen infolge seiner Drehmomentabstützung gegenüber dem Antriebshalter 118 nicht mitmacht und auch nicht behindert. Insofern gestattet das Messsystem 46 eine sehr genaue und feinfühlige Erfassung der Axial- und Winkelpositionen der oberen Zentrierspindelwelle 34 bezüglich des Zentrierspindelgehäuses 32.

Gemäß den Fig. 5, 6 und insbesondere 8 ist der Antriebshalter 118 mit seiner unteren Ringscheibe 122 auf einem ringförmigen Lagerflansch 152 angeflanscht, der seinerseits mit dem Zentrierspindelgehäuse 32 verschraubt ist (die Verbindungsmittel sind wiederum nicht gezeigt) und dieses nach oben verschließt. Am Innenumfang des Lagerflanschs 152 ist der mit der Druckluftquelle Q verbundene, obere Luftlagerabschnitt 56 der Luftlageranordnung 52 für die Zentrierspindelwelle 34 in Form einer porösen Radiallagerbuchse befestigt. Der untere Luftlagerabschnitt 54 der Luftlageranordnung 52, der ebenfalls an die Druckluftquelle Q angeschlossen ist, ist am besten in Fig. 9 zu erkennen. Auch hierbei handelt es sich um eine poröse Radiallagerbuchse, die in einem verjüngten, unteren Abschnitt des Zentrierspindelgehäuses 32 montiert ist. Demgemäß ist die axial zustellbare obere Zentrierspindelwelle 34 mittels der Luftlageranordnung 52 derart im Zentrierspindelgehäuse 32 gelagert, dass sie relativ zum Zentrierspindelgehäuse 32 sehr leichtgängig axial verlagerbar und drehbar ist. Wie weiter oben bereits angedeutet sind der Drehantrieb 48 hierfür wie auch die an der Zentrierspindelwelle 34 wirkende Spann- und Gewichtsausgleichseinrichtung 50 in koaxial fluchtender Anordnung zwischen den Luftlagerabschnitten 54, 56 im Zentrierspindelgehäuse 32 aufgenommen.

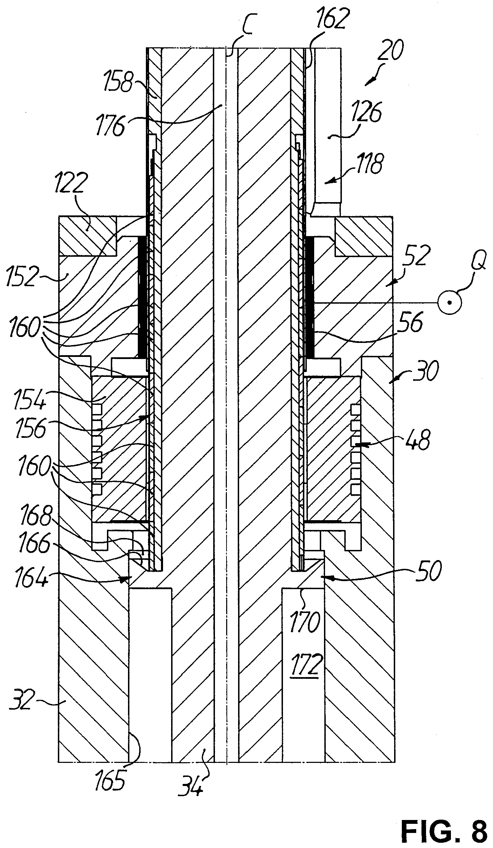

Bei dem Drehantrieb 48 handelt es sich um einen Innenläufer-Torquemotor, mit einem im Zentrierspindelgehäuse 32 montierten Stator 154 (Wicklung) und einem von dem Stator 154 stets umgebenen, am Außenumfang der axial zustellbaren oberen Zentrierspindelwelle 34 befestigten Rotor 156, der in axialer Richtung deutlich länger ist als der Stator 154 und zusammen mit der Zentrierspindelwelle 34 bezüglich des Stators 154 axial verlagerbar ist. Gemäß Fig. 8 umfasst der Rotor 156 eine auf der Zentrierspindelwelle 34 befestigte Rotorhülse 158, die ihrerseits auf ihrem Außenumfang die Magneten 160 des Drehantriebs 48 trägt, welche mit der Rotorhülse 158 vermittels eines Kunststoffs bzw. -harzes vergossen sind. Axial im Bereich des oberen Luftlagerabschnitts 56 der Luftlageranordnung 52 sind die Rotorhülse 158 bzw. die Magneten 160 noch von einer dünnen Lagerhülse 162 des Rotors 156 fest umgeben.

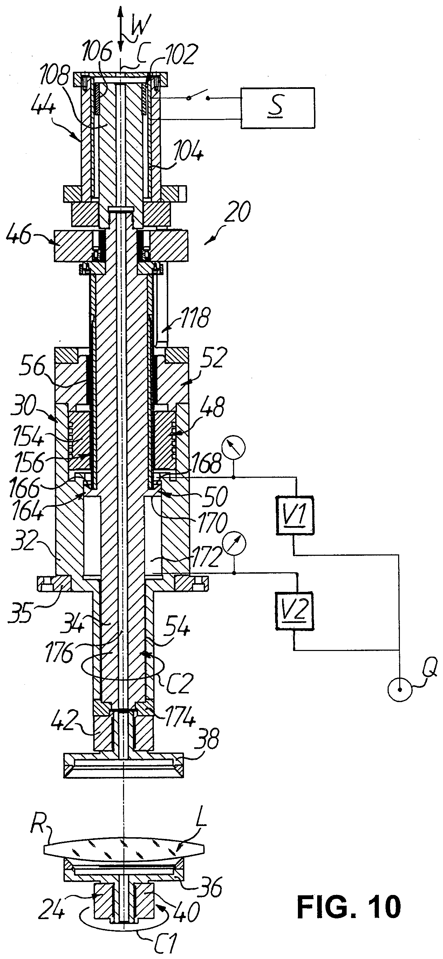

Unterhalb des Drehantriebs 48 ist die Spann- und Gewichtsausgleichseinrichtung 50 im Zentrierspindelgehäuse 32 angeordnet. Wie am besten in den Fig. 6 und 8 zu sehen ist weist die Spann- und Gewichtsausgleichseinrichtung 50 einen dichtungslos ausgebildeten Ringkolben 164 auf, der am Außenumfang der axial zustellbaren Zentrierspindelwelle 34 unmittelbar unterhalb des Rotors 156 des Drehantriebs 48 angebracht ist und nur einen kleinen Ringspalt (in den Figuren nicht zu erkennen) zu einer Zylinderwandung 165 im Zentrierspindelgehäuse 32 belässt. Der Ringkolben 164 bildet auf seiner vom Spannglockenende der oberen Zentrierspindelwelle 34 abgewandten Seite eine ringförmige Wirkfläche 166 aus, die im Zentrierspindelgehäuse 32 dem Stator 154 des Drehantriebs 48 benachbart eine Ringkammer 168 begrenzt, über die der Ringkolben 164 pneumatisch beaufschlagbar ist, um die - in den Figuren nach unten wirkende - Spannkraft zu erzeugen. Auf seiner dem Spannglockenende der oberen Zentrierspindelwelle 34 zugewandten Seite bildet der Ringkolben 164 eine weitere ringförmige Wirkfläche 170 aus, welche größer ist als die Wirkfläche 166 zum Spannen und im Zentrierspindelgehäuse 32 eine weitere Ringkammer 172 begrenzt, über die der Ringkolben 164 pneumatisch beaufschlagbar ist, um an der oberen Zentrierspindelwelle 34 für einen pneumatischen Gewichtsausgleich - mit Kraftrichtung nach oben in den Figuren - zu sorgen. Die Druckluftversorgung für die Ringkammern 168, 172 der Spann- und Gewichtsausgleichseinrichtung 50 ist lediglich in den Fig. 10 bis 12 schematisch gezeigt (Druckluftquelle Q, Servo-Druckregelventile V1, V2). Ebenfalls angedeutete Manometer sollen hier signalisieren, wann im Glockenspannprozess welche Ringkammer 168 bzw. 172 pneumatisch beaufschlagt wird.

Die Fig. 9 zeigt schließlich das in Fig. 6 untere Spannglockenende der oberen Zentrierspindelwelle 34. Die Spannglocke 38 und das Hydrodehnfutter 42 für die Aufnahme der Spannglocke 38 sind hinlänglich bekannt, so dass diese Teile keiner weiteren Erläuterung bedürfen. Das Hydrodehnfutter 42 ist über einen Verbindungsring 174 mit Labyrinthdichtung zum Zentrierspindelgehäuse 32 fest mit der Zentrierspindelwelle 34 verbunden. Im Übrigen beziffert in den Fig. 5 bis 12 das Bezugszeichen 176 eine Durchgangsbohrung, die sich vom Gehäusedeckel 114 des Tauchspulen-Antriebsgehäuses 112 bis zur Spannglocke 38 erstreckt und in an sich bekannter Weise den optionalen Einsatz einer Laser-Zentriereinrichtung (nicht gezeigt) ermöglicht.

Der Ablauf eines Glockenspannprozesses soll nunmehr anhand der Fig. 10 bis 12 kurz erläutert werden, in denen von der unteren Zentrierspindel bzw. deren Zentrierspindelwelle 24 nur das daran gehaltene Hydrodehnfutter 40 mit der unteren Spannglocke 36 gezeigt ist.

Für eine feinfühlige Zustellung der Spannglocke 38 über die obere Zentrierspindelwelle 34 ist zunächst das Gewicht der Zentrierspindelwelle 34 mit der jeweils daran angebrachten Spannglocke 38 und allen axial entlang der Zentrierachse C mitbewegten Teilen - Hydrodehnfutter 42, Verbindungsring 174, Ringkolben 164 der Spann- und Gewichtsausgleichseinrichtung 50, Rotor 156 des Drehantriebs 48, Messringträger 140 und Messkopfträger 138 mit den daran angebrachten Komponenten des Messsystems 46, Rotorteil 108 und Permanentmagnet 106 der Hubeinrichtung 44 - zu kompensieren. Hierzu wird die Ringkammer 172 der Spann- und Gewichtsausgleichseinrichtung 50 über das Servo-Druckregelventil V2 mit einem feinfühlig geregelten Fluiddruck beaufschlagt, der auf die untere Wirkfläche 170 des Ringkolbens 164 wirkt, so dass dieser die genannten Bauteile anhebt. Dabei wird der Fluiddruck bei abgeschaltetem Tauchspulenantrieb 102 so geregelt, dass die Zentrierspindelwelle 34 fast keine Vertikalbewegung mehr ausführt und in der Schwebe gehalten wird. Die Vertikalbewegung wird hierbei durch das in der Zentrierspindel-Baugruppe 20 integrierte Messsystem 46 erfasst, wobei ein vorgewählter Schwellwert einer Restgeschwindigkeit der Vertikalbewegung diesen Regelprozess begrenzt. Der jetzt über das Servo-Druckregelventil V2 in der unteren Ringkammer 172 eingeregelte Fluiddruck wird für den weiteren Prozess konstant gehalten. Der Ausgangszustand nach erfolgter Gewichtskompensation ist in Fig. 10 dargestellt.

Nun kann die Antastphase des Glockenspannprozesses beginnen, in der die obere Spannglocke 38 in Richtung auf die untere Spannglocke 36 bewegt wird, um mit der auf der unteren Spannglocke 36 aufgelegten Linse L in Kontakt zu treten. Hierzu wird der Tauchspulenantrieb 102 der Hubeinrichtung 44 über den Stromregler S bestromt, um die obere Spannglocke 38 mit sehr feinfühlig regelbarer Kraft und klar definiertem Weg abzusenken bis die obere Spannglocke 38 auf der Linse L aufliegt (Ende der Antastphase).

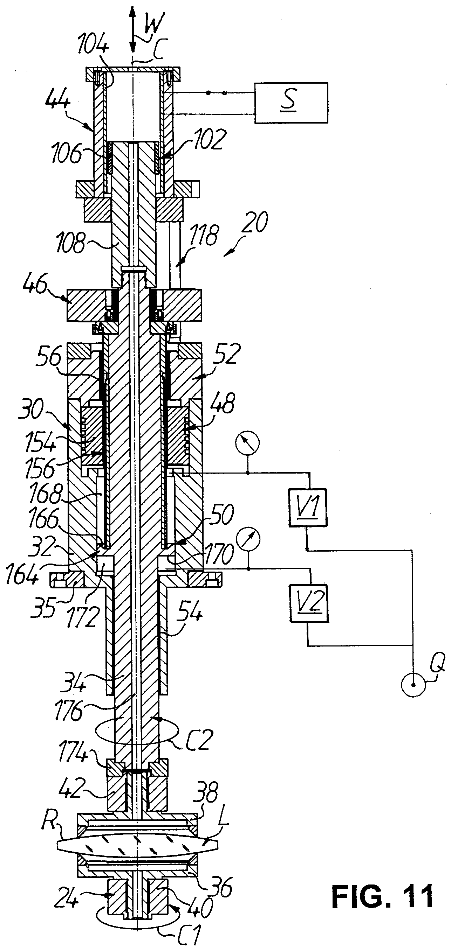

Dann können die Zentrierspindelwellen 24, 34 um die Zentrierachse C drehend angetrieben werden, wodurch die Linse L - ggf. unter Zugabe eines Gleitmittels - leichter in Position rutscht, wobei sich ihre beiden Radienflächen an den Ringschneiden der Spannglocken 36, 38 anlegen (Ende der Ausrichtphase). Dieser Zustand ist in Fig. 11 dargestellt.

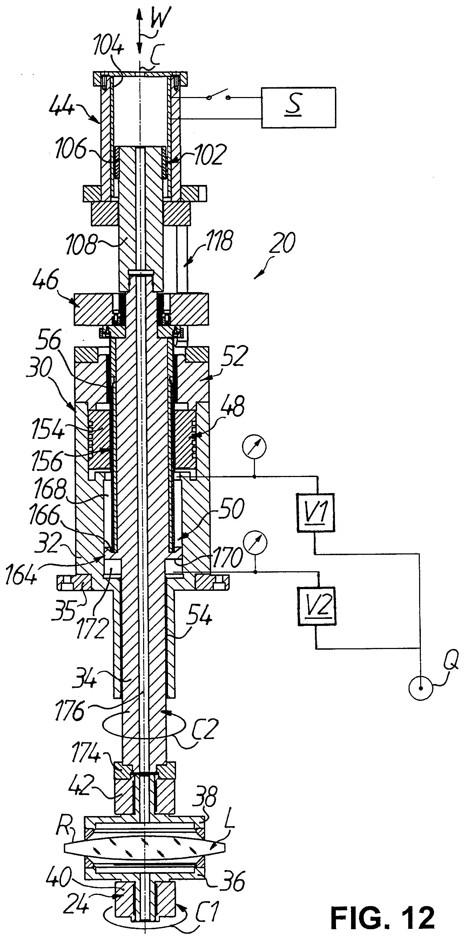

Nachdem die Linse L somit zu ihrer optischen Achse ausgerichtet ist, wird für die Spannphase des Glockenspannprozesses der Tauchspulenantrieb 102 der Hubeinrichtung 44 gemäß Fig. 12 wieder abgeschaltet. Gleichzeitig wird die Spannkraft in definierter Weise durch Druckbeaufschlagung der oberen Ringkammer 168 der Spann- und Gewichtsausgleichseinrichtung 50 und damit der oberen Wirkfläche 166 des Ringkolbens 164 über das Servo-Druckregelventil V1 soweit erhöht, dass die Linse L für den Randschleifprozess sicher eingespannt ist, der nun mit Hilfe der Bearbeitungseinheiten 58, 60 erfolgen kann.

Es ist ersichtlich, dass während des Glockenspannprozesses infolge der koaxialen Anordnung der an der oberen Zentrierspindelwelle 34 wirkenden Aktuatoren (Hubeinrichtung 44, Drehantrieb 48, Spann- und Gewichtsausgleichseinrichtung 50) keine Querkräfte generiert werden, die die Achsflucht der Zentrierspindelwellen 24, 34 gefährden könnten.

Die eigentliche Randbearbeitung, bei der der Rand der zwischen den Spannglocken 36, 38 gespannten Linse L mittels der drehend angetriebenen Schleifscheiben G an den Schleifspindeln 92, 92' der Bearbeitungseinheiten 58, 60 geschliffen wird, während die Schleifspindeln 92, 92' in den Linearachsen X1, X2 und ggf. Z1, Z2 entsprechend der an der Linse L zu schleifenden Kontur CNClagegeregelt bewegt werden, soll an dieser Stelle nicht näher erläutert werden, da sie dem Fachmann hinlänglich bekannt ist.

Wie weiter oben unter Bezugnahme auf die Fig. 1, 3 und 4 schon erwähnt ist an jeder Bearbeitungseinheit 58, 60 eine Kühlschmierstoff-Versorgungseinrichtung 98, 98' für die jeweilige Schleifscheibe G vorgesehen, die nachfolgend für die in Fig. 1 linke Bearbeitungseinheit 58 anhand der Fig. 13 bis 16 näher erläutert werden soll. Die Kühlschmierstoff-Versorgungseinrichtung 98' an der in Fig. 1 rechten Bearbeitungseinheit 60 ist zur linken Kühlschmierstoff-Versorgungseinrichtung 98 spiegelsymmetrisch ausgebildet und soll daher nicht eigens beschrieben werden.

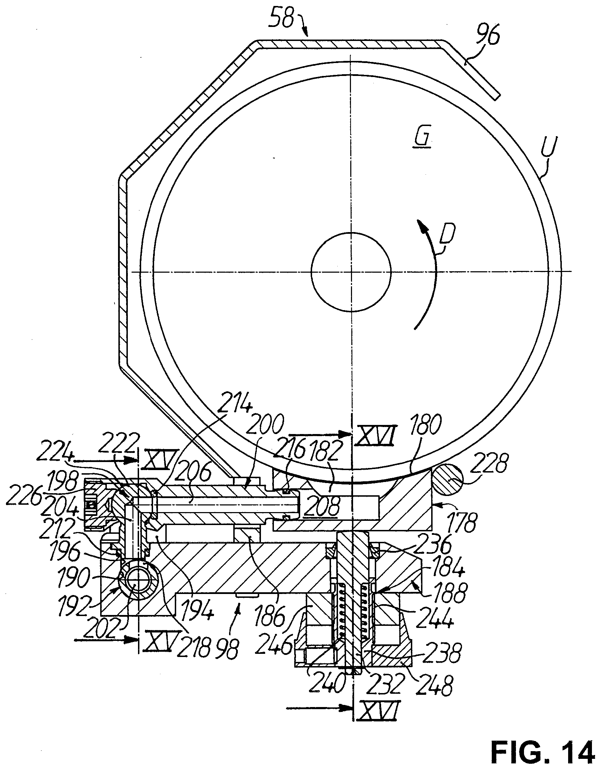

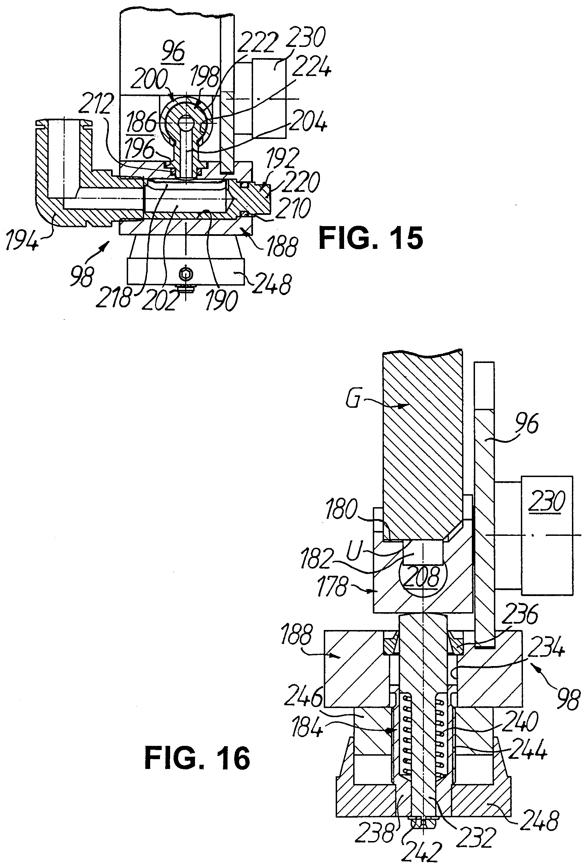

Wie insbesondere die Fig. 14 und 16 zeigen weist die - grundsätzlich auch an anderen Schleifmaschinen einsetzbare - Kühlschmierstoff-Versorgungseinrichtung 98 allgemein einen auf noch zu beschreibende Weise mittelbar an dem Schleifspindelgehäuse 94 gehaltenen, auf einer Umfangsfläche U der Schleifscheibe G sitzenden Zuführschuh 178 auf, der aus einem zerspanbaren Material, vorzugsweise Kunststoff besteht. Der Zuführschuh 178 besitzt eine der Schleifscheibe G zugewandte Sitzfläche 180, die eine zur Umfangsfläche U der Schleifscheibe G im Wesentlichen komplementäre Form aufweist, wozu die Sitzfläche 180 vorzugsweise mittels der Schleifscheibe G als Negativkontur der Umfangsfläche U der Schleifscheibe G am Zuführschuh 178 eingeschliffen ist. Im Wesentlichen mittig ist der Zuführschuh 178 mit einer taschenartigen Vertiefung 182 versehen, in die der Kühlschmierstoff unter Druck zuführbar ist. Ferner ist ein Federmechanismus 184 vorgesehen, mittels dessen der Zuführschuh 178 mit seiner Sitzfläche 180 gegen die Umfangsfläche U der Schleifscheibe G vorgespannt ist, wobei im dargestellten Ausführungsbeispiel die Vorspannkraft des Federmechanismus 184 eingestellt werden kann, wie noch erläutert werden wird.

Gemäß den Fig. 13 und 14 ist die Kühlschmierstoff-Versorgungseinrichtung 98 an dem Spritzschutz 96 gehalten, der seinerseits am Schleifspindelgehäuse 94 befestigt ist. Hierfür weist der Spritzschutz 96 einen Fortsatz 186 auf (siehe Fig. 14), der eine Halterung 188 der Kühlschmierstoff-Versorgungseinrichtung 98 trägt. In Fig. 14 ist die Halterung 188 links mit einer gestuften Durchgangsbohrung 190 zur Aufnahme eines Steuerschiebers 192 versehen, an der gemäß Fig. 15 auch eine L-Steckverschraubung 194 für die Versorgung mit dem Kühlschmierstoff angeschlossen ist. Von oben in den Fig. 14 und 15 mündet eine gestufte Querbohrung 196 in der Durchgangsbohrung 190, in der ein Aufhänger 198 für einen Schuhhalter 200 befestigt ist, der seinerseits den Zuführschuh 178 trägt. Verbindungsbohrungen 202, 204, 206, 208 im Steuerschieber 192, Aufhänger 198, Schuhhalter 200 bzw. Zuführschuh 178 sorgen für eine Fluidverbindung zwischen der L-Steckverschraubung 194 und der Vertiefung 182 im Zuführschuh 178, wobei O-Ringe 210, 212, 214, 216 zur Umgebung hin abdichten. Die Zuflussmenge des Kühlschmierstoffs kann hierbei über eine Steuerschieberöffnung 218 reguliert werden, indem der Steuerschieber 192 in der Durchgangsbohrung 190 der Halterung 188 über eine Handhabe 220 am Steuerschieber 192 verdreht wird.

Gemäß insbesondere Fig. 14 ist der Aufhänger 198 an seinem vom Steuerschieber 192 abgewandten Ende mit einem Kugelkopf 222 versehen, der in einer zugeordneten Aufnahme 224 im Schuhhalter 200 sitzt und dort mittels einer Stellschraube 226 gesichert ist. Der Kugelkopf 222 und die Aufnahme 224 bilden somit ein in Drehrichtung D der Schleifscheibe G gesehen vor dem Zuführschuh 178 liegendes, schleifspindelgehäusefestes Gelenk, an dem der Zuführschuh 178 über den im Wesentlichen rohrförmigen Schuhhalter 200 schwenkbar angelenkt ist, so dass der Zuführschuh 178 im Wesentlichen tangential an die Umfangsfläche U der Schleifscheibe G angelegt werden kann. Ein am Spritzschutz 96 gehaltener Riegel 228, der vermittels einer Handhabe 230 für einen Wechsel des Zuführschuhs 178 entfernt werden kann, bildet hierbei in Drehrichtung D der Schleifscheibe G einen Anschlag für den Zuführschuh 178, der verhindert, dass der Zuführschuh 178 von der Schleifscheibe G mitgerissen wird.

Weitere Details des in Fig. 14 rechts an der Halterung 188 gehaltenen Federmechanismus 184 sind der Fig. 16 zu entnehmen. Der Federmechanismus 184 weist zunächst einen Anschlagstift 232 auf, über den in Richtung auf die Schleifscheibe G eine Kraft auf den Zuführschuh 178 ausgeübt werden kann und der eine gestufte Durchgangsbohrung 234 in der Halterung 188 durchgreift, wobei ein in der Durchgangsbohrung 234 montierter Lippenring 236 im Bereich des über den Zuführschuh 178 in Richtung auf die Schleifscheibe G vorstehenden Endes des Anschlagstifts 232 dafür sorgt, dass der Federmechanismus 184 ansonsten nicht verschmutzt.

Der Anschlagstift 232 ist axial verlagerbar in einer Gewindehülse 238 geführt, wobei radial zwischen dem Anschlagstift 232 und der Gewindehülse 238 eine Schraubendruckfeder 240 vorgesehen ist, die sich sowohl an einer Stufe der Gewindehülse 238 als auch an einer Stufe des Anschlagstifts 232 abstützt, so dass sie den Anschlagstift 232 und die Gewindehülse 238 kräftemäßig auseinander drückt. Im Betriebszustand der Kühlschmierstoff-Versorgungseinrichtung 98 wird der Anschlagstift 232 jedoch durch den Zuführschuh 178 daran gehindert, sich von der Gewindehülse 238 frei wegzubewegen. Wird z.B. für Wartungsarbeiten der Zuführschuh 178 entfernt, verhindert ein Sicherungsring 242 am anderen Ende des Anschlagstifts 232 ein Auseinanderfallen des Federmechanismus 184.

Die am Innenumfang der Durchgangsbohrung 234 über einen ringförmigen Steg axial geführte Gewindehülse 238 weist ein Außengewinde 244 auf, mit dem die Gewindehülse 238 in eine Mutter 246 eingeschraubt ist, die ihrerseits fest an der Halterung 188 angebracht ist. Es ist ersichtlich, das durch Verdrehen der Gewindehülse 238 über ein an der Gewindehülse 238 angebrachtes Einstellrad 248 die Vorspannkraft der Schraubendruckfeder 240 definiert eingestellt werden kann.

Im Betrieb der Kühlschmierstoff-Versorgungseinrichtung 98 wird zunächst die Zufuhr des Kühlschmierstoffs eingeschaltet, so dass Letzterer unter Druck über die L-Steckverschraubung 194, den Aufhänger 198 und den Schuhhalter 200 der Vertiefung 182 im Zuführschuh 178 zugeführt wird. Der Zuführschuh 178 wirkt dann quasi als hydrostatisches Gleitlager und hebt von der Umfangsfläche U der Schleifscheibe G leicht ab. Der Lagerspalt dieser "hydrostatischen Lagerung" ist ersichtlich über die Vorspannung der Schraubendruckfeder 240 im Federmechanismus 184 einstellbar. In der praktischen Erprobung dieser Kühlschmierstoff-Versorgungseinrichtung 98 hat sich gezeigt, dass der Kühlschmierstoff die mit hoher Drehzahl drehende Schleifscheibe G über einen Winkel von mehr als 90° nach Verlassen der "Lagertasche" bzw. Vertiefung 182 noch umgibt und erst später bei größeren Winkeln durch die wirkenden Fliehkräfte von der Schleifscheibe G weggeschleudert wird. Dieser nicht erwartete Effekt ermöglicht es, dass der Zuführschuh 178 relativ weit entfernt von der Eingriffsstelle zwischen Schleifscheibe G und Werkstück L positioniert werden kann, was wiederum erhebliche Vorteile bei (u.a.) dem Werkstückhandling mit sich bringt. Auch bereitet dann ein durch eine unrunde Außenkontur des Werkstücks L bedingtes "Wandern" des Eingriffspunkts zwischen Werkstück L und Schleifscheibe G keine Probleme mehr bei der Kühlung bzw. Schmierung.

Ggf. kann z.B. nach dem Glockenspannprozess und vor der eigentlichen Randbearbeitung die Zentrierung der Linse L zwischen den Spannglocken 36, 38 mittels der gemäß Fig. 3 in der Zentriermaschine 10 integrierten Planschlag-Messeinrichtung 100 kontrolliert werden, die in einer Richtung parallel zur Zentrierachse C die axiale Lage eines Stirnflächen-Randbereichs R der zwischen den Spannglocken 36, 38 gespannten Linse L erfassen kann. Diesbezügliche Details sollen abschließend anhand der Fig. 17 bis 19 erläutert werden, in denen hierfür der Spritzschutz 96' und die Kühlschmierstoff-Versorgungseinrichtung 98' weggelassen wurden.

Die Planschlag-Messeinrichtung 100 umfasst einen handelsüblichen taktilen Taster 250, der sich parallel zur Zentrierachse C erstreckt und für eine Positionierung bezüglich des abzutastenden Stirnflächen-Randbereichs R am Werkstück L zusammen mit der Bearbeitungseinheit 60, d.h. vermittels der CNC-Achsen X2, Z2 bewegbar ist, was in Fig. 18 durch die entsprechenden Bewegungspfeile illustriert ist. Vorher kann der Taster 250 gemäß dem entsprechenden Bewegungspfeil in Fig. 17 bezüglich der Bearbeitungseinheit 60 von einer geschützten Parkposition (Fig. 17) hinter der Schleifscheibe G in eine gegenüber der Schleifscheibe G vorstehende Messposition (Fig. 18 & 19) bewegt werden. Hierfür ist ein Pneumatikzylinder 252 mit Endanschlägen von unten an dem Spindelbock 90' der Bearbeitungseinheit 60 angeflanscht. Eine wahlweise aus dem Pneumatikzylinder 252 ausfahrbare Kolbenstange 254 trägt dabei an ihrem freien Ende eine Halterung 256 für den Taster 250. Die Halterung 256 ist im dargestellten Ausführungsbeispiel so ausgebildet, dass sie alternativ oder zusätzlich einen weiteren Taster (nicht dargestellt) aufnehmen kann, und zwar in einer um 90° gegenüber dem Taster 250 verdrehten Lage, womit eine Kontrolle des Radialschlags der zwischen den Spannglocken 36, 38 gespannten Linse L ebenfalls möglich wäre. Der rotative Bewegungspfeil in Fig. 19 deutet schließlich an, dass die Linse L während des eigentlichen Prüfungsvorgangs, bei dem der Taster 250 den Stirnflächen-Randbereich R an der Linse L berührt, um die Zentrierachse C gedreht wird.

### BEZUGSZEICHENLISTE

- 10: Zentriermaschine
- 12: Maschinenbett
- 14: Aufnahmeraum
- 16: untere Zentrierspindel-Baugruppe
- 18: Portal
- 20: obere Zentrierspindel-Baugruppe
- 22: untere Zentrierspindel
- 24: untere Zentrierspindelwelle
- 26: unteres Zentrierspindelgehäuse
- 28: Umgehäuse
- 30: obere Zentrierspindel
- 32: oberes Zentrierspindelgehäuse
- 34: obere Zentrierspindelwelle
- 35: Lagerring
- 36: Spannglocke
- 38: Spannglocke
- 40: Hydrodehnfutter
- 42: Hydrodehnfutter
- 44: Hubeinrichtung
- 46: Messsystem
- 48: Drehantrieb
- 50: Spann- und Gewichtsausgleichseinrichtung
- 52: Luftlageranordnung
- 54: unterer Luftlagerabschnitt
- 56: oberer Luftlagerabschnitt
- 58: Bearbeitungseinheit
- 60: Bearbeitungseinheit
- 62: Arbeitsraum
- 64, 64': X-Schlitten
- 66, 66': Z-Schlitten
- 68: Führungsschiene
- 70: Führungsschiene
- 72, 72': Führungswagen
- 74: Endanschlag
- 76: Linearmotor
- 78: Stator
- 80: Läufer
- 82, 82': Konsole
- 84, 84': Führungswagen
- 86, 86': Führungsschiene
- 88, 88': Servomotor
- 90, 90': Spindelbock
- 92, 92': Schleifspindel
- 94, 94': Schleifspindelgehäuse
- 96: Spritzschutz
- 98: Kühlschmierstoff-Versorgungseinrichtung
- 100: Planschlag-Messeinrichtung
- 102: Tauchspulenantrieb
- 104: Spule
- 106: Permanentmagnet
- 108: Rotorteil
- 110: Verschraubung
- 112: Tauchspulen-Antriebsgehäuse
- 114: Gehäusedeckel
- 116: Flanschplatte
- 118: Antriebshalter
- 120: obere Ringscheibe
- 122: untere Ringscheibe
- 124: Steg
- 126: Steg
- 128: Axialmesskopf
- 130: Maßband
- 132: Winkelmesskopf
- 134: Messring
- 136: Messkopfadapter
- 138: Messkopfträger
- 140: Messringträger
- 142: oberer Absatz
- 144: Axial/Radial-Luftlageranordnung
- 145: Lagerring
- 146: Axiallagerpad
- 148: Radiallagerbuchse
- 150: Verdrehsicherung
- 152: Lagerflansch
- 154: Stator
- 156: Rotor
- 158: Rotorhülse
- 160: Magnet
- 162: Lagerhülse
- 164: Ringkolben
- 165: Zylinderwandung
- 166: Wirkfläche
- 168: Ringkammer
- 170: Wirkfläche
- 172: Ringkammer
- 174: Verbindungsring
- 176: Durchgangsbohrung
- 178: Zuführschuh
- 180: Sitzfläche
- 182: Vertiefung
- 184: Federmechanismus
- 186: Fortsatz
- 188: Halterung
- 190: Durchgangsbohrung
- 192: Steuerschieber
- 194: L-Steckverschraubung
- 196: Querbohrung
- 198: Aufhänger
- 200: Schuhhalter
- 202: Verbindungsbohrung
- 204: Verbindungsbohrung
- 206: Verbindungsbohrung
- 208: Verbindungsbohrung
- 210: O-Ring
- 212: O-Ring
- 214: O-Ring
- 216: O-Ring
- 218: Steuerschieberöffnung
- 220: Handhabe
- 222: Kugelkopf
- 224: Aufnahme
- 226: Stellschraube
- 228: Riegel
- 230: Handhabe
- 232: Anschlagstift
- 234: Durchgangsbohrung
- 236: Lippenring
- 238: Gewindehülse
- 240: Schraubendruckfeder
- 242: Sicherungsring
- 244: Außengewinde
- 246: Mutter
- 248: Einstellrad
- 250: Taster
- 252: Pneumatikzylinder
- 254: Kolbenstange
- 256: Halterung

- C1, C2: Werkstück-Drehachse (winkellagegeregelt)
- C: Zentrierachse
- D: Drehrichtung der Schleifscheibe
- G: Werkzeug / Schleifscheibe
- L: Werkstück / optische Linse
- Q: Druckluftquelle
- R: Stirnflächen-Randbereich am Werkstück
- S: Stromregler
- U: Umfangsfläche der Schleifscheibe
- V1, V2: Servo-Druckregelventil
- W: Linearachse Spannglocke (lagegeregelt)
- X1, X2: Linearachse Werkzeug (lagegeregelt)
- Z1, Z2: Linearachse Werkzeug (lagegeregelt)

## Patentansprüche

1. Bearbeitungseinheit (58, 60), insbesondere für eine Zentriermaschine (10) für Werkstücke (L), namentlich optische Linsen, mit einer ein Schleifspindelgehäuse (94, 94') aufweisenden Schleifspindel (92, 92'), an der eine Schleifscheibe (G) als Werkzeug drehbar gehalten ist, und einer Kühlschmierstoff-Versorgungseinrichtung (98) für die Zufuhr eines Kühlschmierstoffs zu der Schleifscheibe (G), wobei die Kühlschmierstoff-Versorgungseinrichtung (98) einen zumindest mittelbar an dem Schleifspindelgehäuse (94, 94') gehaltenen Zuführschuh (178) hat, der mittig mit einer Vertiefung versehen ist, in die der Kühlschmierstoff unter Druck zuführbar ist, und welcher eine der Schleifscheibe (G) zugewandte Sitzfläche (180) aufweist, mit der der Zuführschuh (178) auf einer Umfangsfläche (U) der Schleifscheibe (G) sitzt und die eine zur Umfangsfläche (U) der Schleifscheibe (G) im Wesentlichen komplementäre Form hat, und wobei ein Federmechanismus (184) vorgesehen ist, mittels dessen der Zuführschuh (178) mit seiner Sitzfläche (180) gegen die Umfangsfläche (U) der Schleifscheibe (G) vorgespannt ist, **dadurch gekennzeichnet, dass** die Vertiefung (182) taschenartig in der Sitzfläche (180) des Zuführschuhs (178) ausgebildet ist, wobei der Zuführschuh (178) über einen Schuhhalter (200) an einem schleifspindelgehäusefesten Gelenk (222, 224) schwenkbar angelenkt ist, das in Drehrichtung (D) der Schleifscheibe (G) gesehen vor dem Zuführschuh (178) liegt, so dass der Zuführschuh (178) im Wesentlichen tangential an die Umfangsfläche (U) der Schleifscheibe (G) anlegbar ist.

2. Bearbeitungseinheit (58, 60) nach Anspruch 1, **dadurch gekennzeichnet, dass** der Zuführschuh (178) aus einem zerspanbaren Material besteht und die Sitzfläche (180) am Zuführschuh (178) mittels der Schleifscheibe (G) als Negativkontur der Umfangsfläche (U) der Schleifscheibe (G) eingeschliffen ist.

3. Bearbeitungseinheit (58, 60) nach Anspruch 2, **dadurch gekennzeichnet, dass** der Zuführschuh (178) aus Kunststoff besteht.

4. Bearbeitungseinheit (58, 60) nach einem der vorhergehenden Ansprüche, **dadurch gekennzeichnet, dass** die Vorspannkraft des Federmechanismus (184) einstellbar ist.

5. Bearbeitungseinheit (58, 60) nach einem der vorhergehenden Ansprüche, **dadurch gekennzeichnet, dass** am Schleifspindelgehäuse (94, 94') ein Spritzschutz (96, 96') angebracht ist, der die Schleifscheibe (G) bis auf einen Eingriffsbereich für eine Randbearbeitung der optischen Linse (L) umgibt, wobei die Kühlschmierstoff-Versorgungseinrichtung (98) über den Spritzschutz (96, 96') am Schleifspindelgehäuse (94, 94') montiert ist.

## Claims

1. Processing unit (58, 60), particularly for a centering machine (10) for workpieces (L), namely optical lenses, comprising a grinding spindle (92, 92') having a grinding spindle housing (94, 94') and rotatably mounting a grinding wheel (G) as a tool, and a cooling lubricant supply device (98) for supply of a cooling lubricant to the grinding wheel (G), wherein the cooling lubricant supply device (98) has a feed shoe (178), which is mounted at least indirectly on the grinding spindle housing (94, 94') and provided centrally with a recess into which the cooling lubricant can be fed under pressure, and which has a seating surface (180) facing the grinding wheel (G), via which the feed shoe (178) is seated on a circumferential surface (U) of the grinding wheel (G) and which has a shape substantially complementary with the circumferential surface (U) of the grinding wheel (G), and wherein a spring mechanism (184) is provided, by means of which the feed shoe (178) is biased with the seating surface (180) thereof against the circumferential surface (U) of the grinding wheel (G), **characterized in that** the recess (182) is provided pocket-like in the seating surface (180) of the feed shoe (178), wherein the feed shoe (178) is pivotally connected by way of a shoe holder (200) with a joint (222, 224), which is fixed relative to the grinding spindle housing and which lies in front of the feed shoe (178) as seen in the rotational direction (D) of the grinding wheel (G) so that the feed shoe (178) is positionable substantially tangentially against the circumferential surface (U) of the grinding wheel (G).

2. Processing unit (58, 60) according to claim 1, **characterized in that** the feed shoe (178) consists of a machinable material and the seating surface (180) at the feed shoe (178) is ground by means of the grinding wheel (G) as a negative profile of the circumferential surface (U) of the grinding wheel (G).

3. Processing unit (58, 60) according to claim 2, **characterized in that** the feed shoe (178) consists of a plastics material.

4. Processing unit (58, 60) according to any one of the preceding claims, **characterized in that** the biasing force of the spring mechanism (184) is settable.

5. Processing unit (58, 60) according to any one of the preceding claims, **characterized in that** a spray protection means (96, 96') is mounted on the grinding spindle housing (94, 94') and surrounds the grinding wheel (G) up to a region of engagement for edge processing of the optical lens (L), wherein the cooling lubricant supply device (98) is mounted on the grinding spindle housing (94, 94') by way of the spray protection means (96, 96').

## Revendications

1. Unité de traitement (58, 60), en particulier pour une machine de centrage (10) pour pièces (L), en particulier des lentilles optiques, avec une broche de meulage (92, 92') présentant un boîtier de broche de meulage (94, 94'), sur laquelle une meule (G) est maintenue rotative en tant qu'outil, et un dispositif d'alimentation en lubrifiant réfrigérant (98) pour l'apport d'un lubrifiant réfrigérant à la meule (G), où le dispositif d'alimentation en lubrifiant réfrigérant (98) a un patin d'apport (178) maintenu au moins indirectement sur le boîtier de broche de meulage (94, 94'), qui est muni en son centre d'un évidement dans lequel le lubrifiant réfrigérant peut être apporté sous pression, et qui présente une surface d'appui (180) tournée vers la meule (G), avec laquelle le patin d'apport (178) est en appui sur une surface périphérique (U) de la meule (G) et qui a une forme sensiblement complémentaire de la surface périphérique (U) de la meule (G), et où un mécanisme à ressort (184) est prévu, au moyen duquel le patin d'apport (178) est précontraint avec sa surface d'appui (180) contre la surface périphérique (U) de la meule (G), **caractérisée en ce que** l'évidement (182) est réalisé en forme de poche dans la surface d'appui (180) du patin d'apport (178), où le patin d'apport (178) est articulé de manière pivotante, par l'intermédiaire d'un support de patin (200), à une articulation (222, 224) fixée au boîtier de broche de meulage, qui est située devant le patin d'apport (178) dans le sens de rotation (D) de la meule (G), de sorte que le patin d'apport (178) peut être placé sensiblement tangentiellement contre la surface périphérique (U) de la meule (G).

2. Unité de traitement (58, 60) selon la revendication 1, **caractérisée en ce que** le patin d'apport (178) consiste en un matériau usinable et la surface d'appui (180) est formée par meulage sur le patin d'apport (178) au moyen de la meule (G) comme contour négatif de la surface périphérique (U) de la meule (G).

3. Unité de traitement (58, 60) selon la revendication 2, **caractérisée en ce que** le patin d'apport (178) consiste en matière plastique.

4. Unité de traitement (58, 60) selon l'une des revendications précédentes, **caractérisée en ce que** la force de précontrainte du mécanisme à ressort (184) est réglable.

5. Unité de traitement (58, 60) selon l'une des revendications précédentes, **caractérisée en ce qu'**une protection anti-projections (96, 96'), qui entoure la meule (G), à l'exception d'une zone d'intervention pour un traitement de bord de la lentille optique (L), est fixée au boîtier de broche de meulage (94, 94'), où le dispositif d'alimentation en lubrifiant réfrigérant (98) est monté sur le boîtier de broche de meulage (94, 94') par l'intermédiaire de la protection anti-projections (96, 96').
